# EUROPEAN PATENT SPECIFICATION

(11) **EP 3 080 574 B1**
(45) Date of publication and mention of the grant of the patent: **20.11.2019**
(21) Application number: 14805332.5
(22) Date of filing: 21.11.2014
(51) Int. Cl.: G01M 3/22, G01N 1/22, G01N 1/26

(54) **ANNULUS MONITORING**
RINGÜBERWACHUNG
SURVEILLANCE D'ESPACE ANNULAIRE

(30) Priority: 11.12.2013 GB 201321932
(43) Date of publication of application: 19.10.2016
(73) Proprietor: GE Oil & Gas UK Limited, Nailsea Bristol BS48 1BS (GB)
(72) Inventor: GRAHAM, Geoffrey Stephen, Newcastle-Upon-Tyne Tyne and Wear NE6 3PF (GB)
(74) Representative: Secerna LLP
(86) International application number: PCT/GB2014/053450
(87) International publication number: WO 2015/087044

(56) References cited:
- WO-A1-2009/106078
- WO-A2-2010/036792
- DE-A1- 3 321 256
- DE-C1- 3 736 177
- JP-A- S61 129 548
- US-A- 4 380 168
- US-A1- 2003 037 596
- US-A1- 2004 035 464
- US-A1- 2005 145 012
- US-A1- 2010 084 035
- US-B1- 6 634 387

## Description

The present invention relates to a method and apparatus for monitoring an annulus region of one or more flexible pipes. In particular, but not exclusively, the present invention relates to a method whereby a sampling zone of a sampling chamber can be selectively connected to various locations along an annulus region of a flexible pipe and interrogated by a monitoring system so that concentration levels of selected gas species in the sampling zone, and thus at the various different locations along the annulus, can be determined.

Traditionally, flexible pipe has been utilised to transport production fluids, such as oil and/or gas and/or water from one location to another. Flexible pipe has been found to be useful in connecting a subsea location to a sea-level location. Flexible pipe has generally been formed as an assembly of flexible pipe body and one or more end fittings. The pipe body is conventionally formed as a combination of layered materials that form a pressure-containing conduit. The pipe structure allows large deflections in use without causing bending stresses that impair the pipe's functionality over its lifetime. The pipe body is generally built up as a combined structure including tubular metallic and polymer layers which are typically unbonded to one another.

Such unbonded flexible pipes have been used for deep water (less than 3300 feet (1005.84 metres)) and ultra-deep water (greater than 3300 feet (1005.84 metres)) developments. Of course, flexible pipe may also be used for shallow water applications (for example, less than around 500 metres depth) or even for onshore (overland) applications.

Conventionally an inner bore of a flexible pipe is defined by a polymer fluid retaining layer referred to as a pressure sheath. Outside this fluid retaining layer are one or more metallic wire layers which between them provide a majority of the pipe structural strength. Outside one or more of these layers there may be a further polymer layer referred to as an intermediate layer and/or an external polymer sealing layer referred to as an outer sheath. The outer sheath typically prevents sea water from contacting the metallic layers. The volume between the pressure sheath and intermediate layer or between an intermediate layer and outer sheath or between the pressure sheath and outer sheath defines an annulus region.

During the service life of a flexible pipe in a pipeline, gases permeate through the various fluid retaining layers and fill one or more annulus regions defined by the various layers. Amongst the many problems this can cause is the fact that these gases can cause an outer sheath of the pipeline to breach if the annulus is not vented sufficiently or the steel layers to corrode. It is known that the collected gases and their concentrations vary depending upon the field where the flexible pipe is deployed and the service of the pipeline. From a corrosion point of view methane, carbon dioxide, hydrogen sulphide, water and/or methanol are all fluids which are of interest. It is advantageous to be able to monitor the levels of key target gas levels to ensure they stay below a desired level during operation of a flexible pipe. For example, a goal is to monitor a corrosive gas level to ensure they stay below an upper limit of so-called sweet service as defined in ISO 15156. Generally, any environment with an H₂S partial pressure above 0.05 pounds per square inch absolute (psia) is considered as sour service. Conventionally vent valves in a riser system are provided which will open with a differential pressure of 2 bar with the external ambient pressure (3 bar absolute). Under such circumstances, a sour environment in the annulus would be in a worst case anything above 0.1725% H₂S or 1725 parts per million (ppm).

When the gas composition in terms of H₂S increases or when there is a breach of an outer sheath, then the steel tensile layers of a flexible pipe have an increased risk of corrosion. This can reduce the fatigue life of a pipe dramatically and result in failure of the product. Therefore, it would be useful if the products of corrosion such as hydrogen could be monitored. Conventionally in order to provide analysis of the fluids in an annulus of a flexible pipe periodic sampling has taken place with the test samples being analysed offline. In more detail, analysis of the gas is normally carried out making use of a bottle or bag sample which is attached to a dual tap system opened to fill the bag then closed to isolate the sample. The analysis which can be carried out under such circumstances is limited and often a considerable delay can be experienced between sampling the annulus and determining conditions in the annulus. Furthermore, such sampling is labour intensive and prone to user error.

Also conventionally any samples taken from an annulus of a flexible pipe have been removed at a predetermined single location along a length of that annulus. As a result conditions at various spaced apart locations along the flexible pipe have been hard to detect and/or predict or indeed impossible to detect and/or predict. This has led to inaccuracy and an increased risk of pipe failure.

A known example of a monitoring system comprising a sodium leakage detection system for a fast breeder reactor is described in US4380168 A. A liner, for forming a barrier against medium leaking from a flexible pipe, is described in US6634387 B1. An example of a system for monitoring the sealing of a flexible pipe is described in US2010/084035 A1.

It is an aim of the present invention to at least partly mitigate the above-mentioned problems.

It is an aim of certain embodiments of the present invention to provide a system that allows monitoring of not only expelled volumes of gas through a flexible pipe annulus venting system but also the constituent gas makeup of the expelled gas.

It is an aim of certain embodiments of the present invention to provide a gas monitoring system which can detect the existence of key gas constituents as well as their concentrations in real time.

It is an aim of certain embodiments of the present invention to enable a monitoring system to selectively monitor target gas species at multiple different locations along the length of a single annulus of any single flexible pipe.

It is an aim of certain embodiments of the present invention to provide a monitoring system which can remain in operation without substantive recalibration being necessary and which can monitor target gas species in an annulus of a flexible pipe over a period of time to help predict or determine the occurrence of an event such as an outer sheath failure or water plug formation.

It is an aim of certain embodiments of the present invention to be able to conveniently monitor multiple target species in real time and provide a concentration value for one or more of the target gas species.

It is an aim of certain embodiments of the present invention to provide a method and apparatus for selectively monitoring annulus regions of multiple flexible pipes connectable to a common monitoring system.

According to a first aspect of the present invention there is provided apparatus for monitoring an annulus region of at least one flexible pipe, the annulus region comprising an annular volume defined between fluid retaining layers of the flexible pipe;
the apparatus comprising:
a sampling chamber comprising a sampling zone; and
a monitoring system for determining a concentration value for at least one target gas species in the sampling zone; wherein
the sampling zone is selectively connectable to a one of a plurality of fluid sampling passageways comprising tubes in fluid communication with an annulus region of a respective one, of at least one, flexible pipe, to provide fluid from said an annulus region in the sampling zone via the connected sampling passageway.

Aptly each sampling passageway comprises at least one fluid inlet disposed at a respective location along a length of said a respective one flexible pipe.

Aptly the respective location of each fluid inlet associated with each sampling passageway is at a different location spaced apart along the length of the flexible pipe.
Aptly each tube extends a respective distance along the length of the flexible pipe; and
each fluid inlet comprises an open end of the tube; or
each tube extends along a whole length of the flexible pipe; and each fluid inlet comprises a through hole in a wall member of the tube at a predetermined location along the length of the flexible pipe.

Aptly each tube is an elongate element having a substantially round or square cross section wound as an armour layer winding of the flexible pipe.

Aptly the apparatus further comprises:
a respective valve member associated with each sampling passageway, that is responsive to a valve control signal for selectively fluidically connecting or disconnecting the annulus region with or from the sampling zone via the sampling passageway.

Aptly the sampling chamber comprises:
a plurality of chamber inlet orifices each associated with a corresponding outlet of a respective one respective valve member;
an evacuation exit orifice connectable to a vacuum pump via an exit valve; and
a flush agent introduction orifice connectable to a source of a flushing agent via an introduction valve.

Aptly the monitoring system comprises a laser absorption spectroscopy monitoring system.

Aptly the monitoring system comprises an optical source and detector.

Aptly the detector comprises an infrared or near infrared gas analyser system.

Aptly the optical source comprises a quantum cascade laser (QCL).

Aptly the optical source comprises a tunable diode laser (TDL).

Aptly the analyser system comprises an interface compensation unit.

Aptly the analyser system comprises a frequency modulation unit.

Aptly a temperature of a target gas flowing from an annulus region to the sampling zone via the sampling passageway is selectable to determine a parameter associated with the target gas.

Aptly the apparatus further comprises:
an analyser that provides data usable for health monitoring or early warning of catastrophic failure responsive to said concentration value.

Aptly the analyser monitors trends of at least one target gas species over a long and/or short period of time.

Aptly the apparatus further comprises:
a flow rate monitor that selectively determines a flow rate of fluid exiting an annulus region of a flexible pipe into the sampling zone.

Aptly the monitoring system determines a parts per million (ppm) value or parts per billion (ppb) value for a gas species.

Aptly the monitoring system determines a pounds per square inch absolute (psia) partial pressure for a gas species.

Aptly the monitoring system determines a concentration value for at least one of methane (CH₄), carbon dioxide (CO₂), hydrogen sulphide (H₂S), water (H₂0), hydrogen gas (H₂) and/or methanol (MₑOH) in the sampling zone.

Aptly the annulus region comprises an annular volume defined between an inner fluid retaining layer and an outer sheath layer of a flexible pipe.

Aptly the apparatus further comprises:
an ATEX certified enclosure containing at least the sampling chamber and the monitoring system.

According to a second aspect of the present invention there is provided a method of monitoring an annulus region of a flexible pipe, the annulus region comprising a volume defined between fluid retaining layers of the flexible pipe,
the method comprising the steps of:
selectively connecting a one of a plurality of fluid sampling passageways in fluid communication with an annulus region of, and extending at least partially along the length of, a respective one, of at least one, flexible pipe, to a sampling zone of a sampling chamber;
providing fluid from said an annulus region to the sampling zone via the connected sampling passageway; and
via a monitoring system, determining a concentration value for at least one target gas species in the sampling zone.

Aptly the method comprises:
providing at least one target gas species from a respective location along said annulus region to each sampling passageway via at least one fluid inlet of the sampling passageway disposed at said respective location.

Aptly the method further comprises the steps of, one-by-one selectively connecting each of the plurality of fluid sampling passageways to the sampling zone; and
determining a corresponding concentration value for at least one target gas species provided to the sampling zone when each sampling passageway is connected; and/or
determining a corresponding concentration value for a plurality of different locations along a length of an annulus of a flexible pipe.

Aptly the method further comprises the steps of:
selectively connecting each sampling passageway in fluid communication with said an annulus region and said sampling zone by selectively opening a respective valve member associated with the sampling passageway; and
providing target gas, comprising each said target gas species, from the annulus to the sampling zone via the open valve member.

Aptly the method further comprises one or more of the following steps:
determining each concentration value via a quantum cascade laser (QCL) source and detector;
selecting a temperature of a target gas flowing from said an annulus region to the sampling zone thereby determining a parameter associated with the target gas; and
determining a standard sour service rating or occurrence of an event associated with said an annulus region.

Aptly the method further comprises:
determining occurrence of an event when the occurrence of an event comprises occurrence of an outer sheath rupture or a slow leak into the annulus or formation of a water plug or accumulation of water condensation.

According to a third aspect of the present invention there is provided a flexible pipe for transporting production fluids, comprising:
a segment of flexible pipe body;
at least one end fitting at a respective end of the flexible pipe body; and
a plurality of tubes each having a respective length and wound as a respective winding of a respective tensile armour layer of the flexible pipe body; wherein
the tubes are all in fluid communication with an annulus region of the flexible pipe body, the annulus region comprising an annular volume between fluid retaining layers of the flexible pipe body; and wherein the tubes are each selectively connectable to a sampling zone of a monitoring system that determines a concentration value for at least one target gas species in the sampling zone; wherein the plurality of tubes comprises at least a first tube wound in a first tensile armour layer, and at least a further tube wound in a second tensile armour layer, the first tensile armour layer being radially innermost of the second tensile armour layer.

Aptly each tube comprises a fluid inlet disposed at a respective location along a length of said a respective one flexible pipe; and/or each tube has a substantially round or square or elliptical cross section; and/or each tube comprises an armouring element in the flexible pipe body and provides at least a portion of a sampling passageway and/or
The at least one first tube and the at least one further tube are counter wound in their respective layers.

Certain embodiments of the present invention provide a gas or other fluid monitoring system which is attachable to a vent path leading from one or more flexible pipes. The monitoring system can determine, in real time, a concentration value for at least one target gas species in a sampling zone which is connectable to an annulus region of a connected flexible pipe. Certain embodiments of the present invention provide an apparatus and method for monitoring an annulus region of at least one flexible pipe.

Certain embodiments of the present invention enable information relating to conditions at specific locations along an annulus region of a flexible pipe to be gathered. By gathering data associated with specific locations along the length of a pipe better diagnostic information can be generated and used which helps predict when a particular event has occurred or when a particular event may be likely to happen.

Certain embodiments of the present invention utilise a quantum cascade laser based system as a monitoring system to constantly detect different key gas constituents in a measured gas sample from an annulus of a flexible pipe. Very accurate measurement of target gas species can be provided and the monitoring system can be tuned to detect specific gases.

Certain embodiments of the present invention include a flow measurement system which can determine an overall volume of an annulus region. When combined with a gas parts per million measurement this can provide a valuable understanding of permeated annulus gases.

Certain embodiments of the present invention can be used to determine gas migration rates for key gas constituents and together with an annulus free volume these can be utilised to determine trends and the occurrence of events at a flexible pipe. For example, an outer sheath rupture or slow leak into an annulus or formation of a water plug or water condensation can be predicted and/or identified.

Embodiments of the present invention will now be described hereinafter, by way of example only, with reference to the accompanying drawings in which:
Figure 1 illustrates flexible pipe body;
Figure 2 illustrates use of a flexible pipe; and
Figure 3 illustrates fluid sampling passageways in communication with two annulus regions;
Figure 4 illustrates how fluid sampling passageways can communicate with a sampling zone; and
Figure 5 illustrates alternative sampling passageways in communication with a single annulus region.

In the drawings like reference numerals refer to like parts.

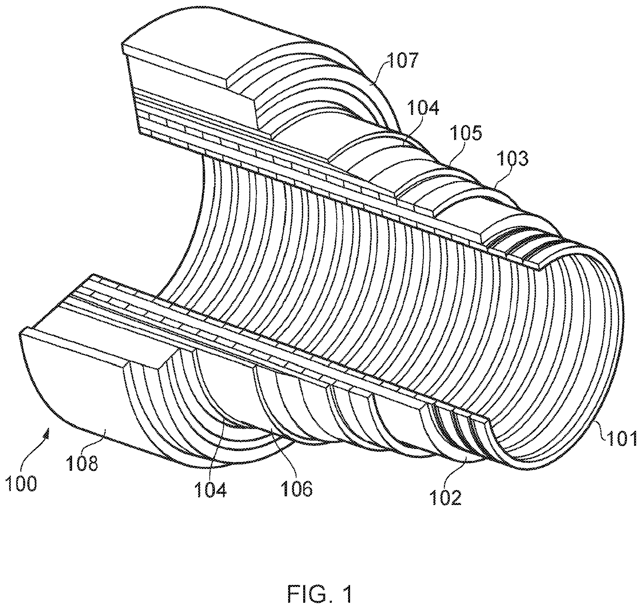

Throughout this description, reference will be made to a flexible pipe. It will be understood that a flexible pipe is an assembly of a portion of pipe body and one or more end fittings in each of which a respective end of the pipe body is terminated. Figure 1 illustrates how a portion of pipe body 100 (referred to as a segment) is formed from a combination of layered materials that form a pressure-containing conduit. Although a number of particular layers are illustrated in Figure 1, it is to be understood that the present invention is broadly applicable to coaxial pipe body structures including one or more layers manufactured from a variety of possible materials. For example, the pipe body may be formed from metallic layers, composite layers, or a combination of different materials. It is to be further noted that the layer thicknesses are shown for illustrative purposes only.

As illustrated in Figure 1, pipe body includes an optional innermost carcass layer 101. The carcass provides an interlocked construction that can be used as the innermost layer to prevent, totally or partially, collapse of an internal pressure sheath 102 due to pipe decompression, external pressure, and/or tensile armour pressure and mechanical crushing loads. The carcass layer may be a metallic layer, formed from carbon steel or the like, for example. The carcass layer may also be formed from composite, polymer, or other material, or a combination of materials. It will be appreciated that certain embodiments of the present invention are applicable to 'smooth bore' operations (i.e. without a carcass) as well as such 'rough bore' applications (with a carcass).

The internal pressure sheath 102 acts as a fluid retaining layer and comprises a polymer layer that ensures internal fluid integrity. It is to be understood that this layer may itself comprise a number of sub-layers. It will be appreciated that when the optional carcass layer is utilised the internal pressure sheath may be referred to by those skilled in the art as a barrier layer. In operation without such a carcass the internal pressure sheath may be referred to as a liner.

The pressure armour layer 103 is a structural layer with elements having a lay angle close to 90° that increases the resistance of the flexible pipe to internal and external pressure and mechanical crushing loads. The layer also structurally supports the internal pressure sheath, and is an interlocked construction of wires wound with a lay angle close to 90°.

The flexible pipe body also includes a first tensile armour layer 105 and a second tensile armour layer 106. Each tensile armour layer is used to sustain tensile loads and internal pressure. The tensile armour layer may be formed from a plurality of metallic wires (to impart strength to the layer) that are located over an inner layer and are helically wound along the length of the pipe at a lay angle typically between about 10° to 55°. The tensile armour layers may be counter-wound in pairs. The tensile armour layers may be metallic layers, formed from carbon steel, for example. The tensile armour layers may also be formed from composite, polymer, or other material, or a combination of materials.

The flexible pipe body shown also includes optional layers 104 of tape which each help contain underlying layers and may act as a sacrificial wear layer to help prevent abrasion between adjacent layers.

The flexible pipe body also includes optional layers of insulation 107 and an outer sheath 108, which comprises a polymer layer used to help protect the pipe against penetration of seawater and other external environments, corrosion, abrasion and mechanical damage.

Each flexible pipe thus comprises at least one segment of pipe body 100 together with an end fitting located at at least one end of the flexible pipe. An end fitting provides a mechanical device which forms the transition between the flexible pipe body and a connector. The different pipe layers as shown, for example, in Figure 1, are terminated in the end fitting in such a way as to transfer the load between the flexible pipe and the connector.

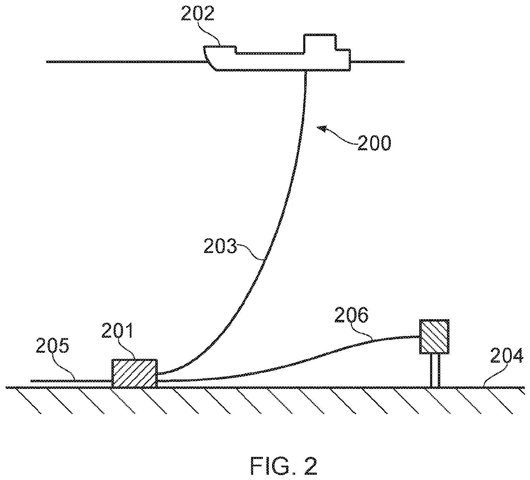

Figure 2 illustrates a riser assembly 200 suitable for transporting production fluids such as oil and/or gas and/or water from a subsea location 201 to a floating facility 202. For example, in Figure 2 the subsea location 201 includes an end of a subsea flow line. The flexible flow line 205 comprises a flexible pipe, wholly or in part, resting on the sea floor 204 or buried below the sea floor and used in a static application. The floating facility may be provided by a platform and/or buoy or, as illustrated in Figure 2, a ship. The riser assembly 200 is provided as a flexible riser, that is to say a flexible pipe 203 connecting the ship to the sea floor installation. The flexible pipeline may be formed from a single segment or multiple segments of flexible pipe body with end fittings connected end-to-end.

It will be appreciated that there are different types of riser, as is well-known by those skilled in the art. Certain embodiments of the present invention may be used with any type of riser, such as a freely suspended riser (free, catenary riser), a riser restrained to some extent (buoys, chains) or totally restrained riser. Certain other embodiments of the present invention can be used as flowlines or jumpers or the like.

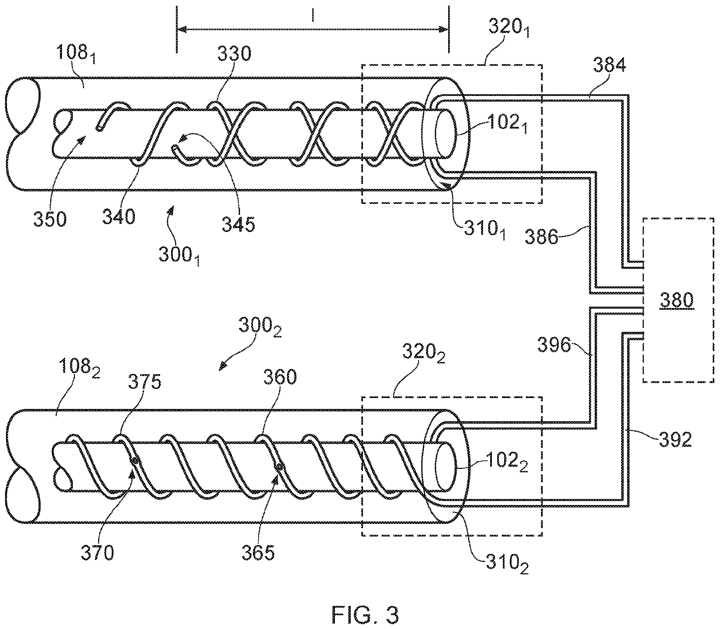

Figure 3 is a schematic drawing illustrating a first flexible pipe 300₁ and a further separate flexible pipe 300₂. Although shown having similar sizes and being aligned close to one another it will be understood that certain embodiments of the present invention are broadly applicable to use with one or more pipes of different shapes and configurations. Each flexible pipe is illustrated with reference to a respective internal barrier layer 102₁, 102₂ and a generally coaxially aligned outer sheath 1081, 1082. An annular region 310₁ is defined between an inner surface of the outer sheath 108₁ of the first flexible pipe 300₁ and an outer surface of the corresponding barrier layer 102₁. Likewise an annular region 310₂ is defined between an inner surface of the outer sheath 108₂ of the further flexible pipe 300₂ and a radially outer surface of the corresponding barrier layer 1022. It will be appreciated that other layers are not illustrated in Figure 3 for the sake of clarity. Likewise the examined annulus region may be between other fluid containing layers in a flexible pipe. A respective end fitting 320₁ in which an end of the first flexible pipe 300₁ is terminated is schematically illustrated in Figure 3 by a dotted line. Likewise a respective end fitting 320₂ which terminates an end of the further flexible pipe 300₂ shown in Figure 3 is illustrated by a dotted line.

Figure 3 also illustrates how one or more helical windings of a radially inner most tensile layer and helical windings of a radially outer most tensile armour layer can be provided by hollow tubes. A radially inner most winding 330 is, for example, an inner winding of the inner tensile layer 105₁ of the first flexible pipe 300₁. A helical winding having a greater radius of curvature and forming an outer winding of the outer tensile layer 106₁ of the first flexible pipe 300₁ is also illustrated in Figure 3. The inner and outer windings of the first flexible pipe are shown in a counter wound fashion. It will be appreciated that certain embodiments of the present invention are not restricted in their use of fluid communicating windings being in any one or shared layers or any particular layers. The inner winding 330 and outer winding 340 in the example shown are formed as a stainless steel tubes having rigid yet windable walls. Alternative materials that are windable, relatively crush resistant and in which a lumen can be formed can of course be used. A lumen is defined by the bore that extends longitudinally along the length of the wound tube. A length of the tube is selected so that an open end 345 of the inner winding 330 is located at a predetermined length I from an end of the flexible pipe 300₁. An open end 350 of the winding 340 in the outer tensile layer is located at a different position along the length of the flexible pipe. The open end allows for fluid communication between the annulus and the lumen. In the example illustrated in Figure 3 the open end of the winding in the outer tensile layer extends a greater distance along the length of the flexible pipe from the end of the flexible pipe. It will be appreciated that different lengths of winding can be selected according to certain embodiments of the present invention and that windings in a radially outer layer could in fact have a shorter length than corresponding windings in a radially inner layer.

Figure 3 also helps illustrate how alternatively a fluid communicating opening in a hollow winding can be provided through a side wall of a wound tube rather than by an open end of a tube. As illustrated in Figure 3 the further flexible pipe 300₂ has a winding 360 provided by a stainless steel tube which extends as a winding of a particular tensile armour layer. A through hole 365 is provided in the wall of the tube at a predetermined location along the length of the further flexible pipe 300₂. The through hole allows for fluid communication from the annulus region into a lumen defined by a core region in the hollow tube. The winding 360 extends along a whole length of the flexible pipe 300₂. Figure 3 also helps illustrate how a further through hole 370 can be provided through a wall of another winding 375 which is a tensile armour layer winding in the same tensile armour layer in the further flexible pipe 300₂. The two windings 360, 375 are thus illustrated as being wound in a similar fashion. By providing one or more through holes in a wound, tube-like, member fluid can be communicated from the annulus region into the lumen of the respective tubes at specific locations along the length of the flexible pipe defined by where the through holes are located. These locations, like the locations of the open ends 345, 350 of the windings in the first flexible pipe 300₁ can be located at key locations along the length of the flexible pipe where conditions of a flexible pipe annulus are to be closely monitored. For example at an expected sag bend or hog bend or touch down area of a riser.

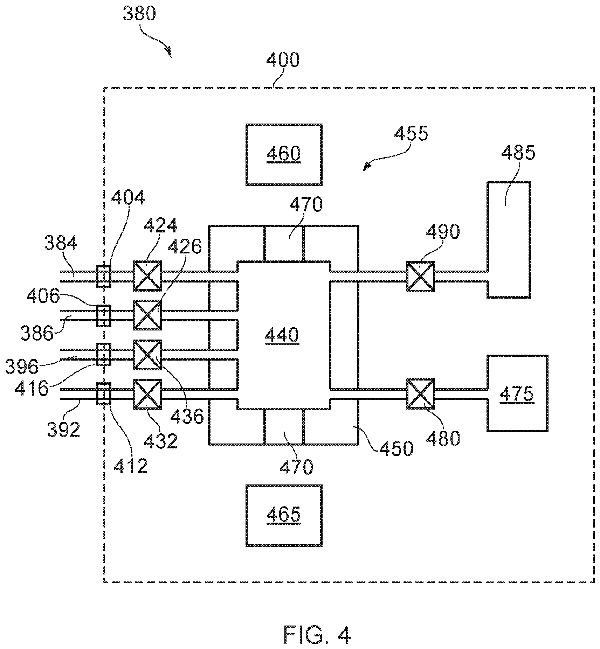

The lumen of each winding shown in Figure 3 provides a part of a fluid sampling passageway in communication between a respective annulus region 310₁, 310₂ and an inspection system 380 which is illustrated in more detail in Figure 4. The tube 330 wound as an armour winding of the radially innermost tensile armour layer of the first flexible pipe 300₁ is connected to the inspection system 380 via a fluid communication passageway 384. Aptly this is provided, at least in part, by a suitable passageway provided in the end fitting and a further steel tube leading from an external connector on the end fitting 320₁ to a housing for the inspection system. The tube 340 wound as a winding in the radially outer layer of the first flexible pipe is connected to the inspection system via a fluid communication passageway 386. Aptly this is provided, at least in part, by a suitable passageway provided in the end fitting and a steel tube leading from an external connector on an end fitting 320₁ to a housing for the inspection system. The tube 360 wound as a winding of the tensile armour layer of the further flexible pipe 300₂ is connected to the inspection system 380 by a fluid communication passageway 392. Aptly this is provided, at least in part, by a suitable passageway provided in the end fitting and a steel tube leading from an external connector on an end fitting 320₂ to a housing for the inspection system. The tube-like member 360 wound as a winding of the tensile armour layer of the further flexible pipe 300₂ is connected to the inspection system 380 via a fluid communication passageway 396. Aptly this is provided, at least in part, by a suitable passageway provided in the end fitting and a steel tube leading from an external connector on an end fitting 320₂ to a housing for the monitoring system.

Figure 4 illustrates the inspection system 380 in more detail. The inspection system 380 is located in a housing 400. Aptly the housing 400 is an ATEX certified enclosure. The housing 400 may be secured to an outer surface of an end fitting or may be secured to a rigid structure at a location remote from an end fitting. Each tube or conduit which provides a respective fluid communication passageway 384, 386, 396, 392 from a flexible pipe is secured via a respective connector 404, 406, 412, 416 to the housing 400. Each fluid communication passageway is continued by a respective conduit or tube via a respective valve 424, 426, 432, 436. Each valve is a two state valve having an open state or a closed state. In the open state fluid communication is possible with a respective conduit or tube leading to the housing 400 thus fluidly connecting a respective annulus region and more particularly a specific location along a length of the annulus region of a corresponding flexible pipe to an inner sampling zone 440 within a sampling chamber 450.

A monitoring system 455 is utilised to determine a concentration value for at least one target gas species in the sampling zone. For example the monitoring system is able to determine a concentration value for at least one of methane (CH4₄), carbon dioxide (CO₂), hydrogen sulphide (H₂S), water (H₂0), hydrogen gas (H₂) and/or methanol (MₑOH) in the sampling zone.

As illustrated in Figure 4 four chamber inlet orifices, each associated with a corresponding outlet of a respective valve, allow ingress of gas from an annulus region into the sampling zone. Other numbers of inlets could of course be utilised depending upon a number of passageways in a number of flexible pipes that are being monitored. A single inlet to the chamber could of course alternatively be used with a multiplexing valve arranged to receive multiple inputs. The monitoring system 455 which includes an optical source 460 and associated detector 465 allows for detection of concentration values through windows 470 in the chamber 450. It will be appreciated that the monitoring system 455 illustrated in Figure 4 is a transmission mode monitoring system. Reflection mode monitoring systems are of course usable in which case only one window 470 in the chamber 450 would be required. The windows are made of a suitable material that allows transmission of emitted e/m radiation. Aptly the windows are glass or CaF2 or the like.

A pump 475 is selectively connectable to the sampling zone 440. Aptly the pump 475 is a negative pressure pump. Aptly the pump 475 is a vacuum pump. By opening an extraction valve 480 and ensuring that all other remaining valves connected to the sampling zone are closed any previously present target gas in the sampling zone 440 can be removed. This purging of the sampling zone 440 can be assisted by providing a purge fluid source 485 which can be selectively allowed to enter and flow through the sampling zone 440 by opening and closing a respective purge valve 490. The purge source 485 and purge valve 490 and pump 475 and extraction valve 480 can work in tandem simultaneously or one by one to ensure that the sampling zone 440 can be cleansed prior to the introduction of a new target gas sample from an annulus region. The purge source can alternatively or additionally be used as a source of buffer fluid should sampling volumes of target gas samples be small.

Although not illustrated, a pressure sensor can be utilised in each fluid communication passageway leading from the flexible pipe annulus to the sampling chamber to enable a free volume of the annulus to be monitored. Monitoring the annulus free volume helps indicate whether a liquid has entered the annulus as indicated by a reduction in a value of the annulus free volume. A curve of free volume verses time can also be utilised to identify an instance of water condensation or a filing up of an annulus space due to a leak in a flexible pipe outer sheath. Likewise a decrease in annulus free volume without an increase in any gas migration rate can be utilised to indicate the formation of a plug.

The monitoring system 455 illustrated in the example shown in Figure 4 is a semiconductor diode spectrometer based system. Aptly the monitoring system is a laser absorption spectroscopy monitoring system. Aptly the monitoring system includes a source 460 and a detector 465 which are an optical source and optical detector. Aptly the detector is an infrared or near infrared gas analyser system. Aptly the optical source is a quantum cascade laser (QCL). Alternatively the optical source can be a tuneable dialled laser (TDL) or the like. It will be appreciated that according to certain embodiments of the present invention a broad range of inline analysers can be utilised in a modified arrangement which puts multiple fluid sampling passageways (each having an inlet at a specific location along the length of an annulus region) in fluid communication with an inline analyser. Such fluid analysers can be based on one or more of a gas chromatograph, a mass spectrometer, an infrared spectroscope, an electro chemical sensor, a catalytic sensor, a microfluidic analyser or the like.

Aptly the quantum cascade laser based monitoring system is of a type provided by Cascade Technologies Limited. Aptly the monitoring system provides a hyper spectral sensor or imager comprising a laser for illuminating a scene and a detector for detecting light emitted by the laser and transmitted through the scene. The laser is a chirped laser arranged to output multiple pulses having different wave length ranges. The multiple pulses are used to form an extended continuous spectrum for illuminating the scene. Aptly the multiple pulses combine to form an extended continuous spectrum for illuminating the scene having wave lengths ranging from about around 1 µm to 20µms. Aptly the range is about around 7µm to 14µms.

Use of a mid-infrared region of around 5µm to 12µms allows the monitoring system to examine the fundamental absorption bands of most gases rather than the harmonic or overtone bands associated with other techniques. Since the fundamental bands are stronger they lead to a higher level of measurement performance. In addition the region has less interference from gaseous water and can therefore successfully make accurate measurements in a "wet" environment with minimal interference that might otherwise cause problems with other monitoring techniques. By utilising such monitoring systems according to certain embodiments of the present invention in which an annulus region of a respective one of at least one flexible pipe can be connected to a sampling zone at multiple specific locations along the annulus of a flexible pipe, an improved and more versatile gas analysis can be carried out which provides improved diagnostic and predictive abilities relative to conventional techniques.

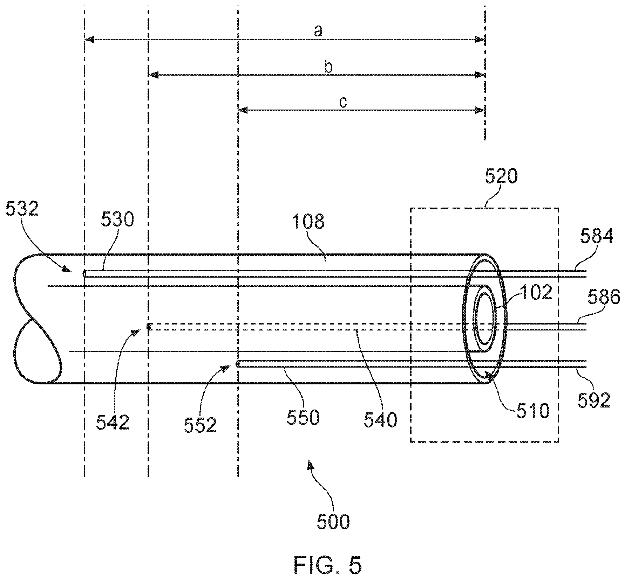

Figure 5 illustrates an alternative embodiment of the present invention showing how an annulus region of a single flexible pipe 500 can be monitored. As illustrated in Figure 5 an annulus region 510 is defined in the flexible pipe between an outer surface of a barrier layer 102 of the flexible pipe and an inner surface of the outer sheath 108. As previously mentioned it will be appreciated that other annulus regions, such as an annular region between an intermediate layer and the outer sheath or between an intermediate layer and the barrier layer, can be monitored according to certain embodiments of the present invention. An end of the flexible pipe 500 shown in Figure 5 is illustrated as being terminated in an end fitting 520 shown schematically by a dotted line.

Three sampling passageways provided by three tubes or conduits are illustrated in Figure 5. It will be appreciated that two, three, four or more sampling passageways can be provided in any one flexible pipe according to certain embodiments of the present invention. A first tube 530 extends a respective predetermined distance along a length of the flexible pipe. This distance a is a distance from a notional end of the flexible pipe to an open end 532 of the tube 530. As such the open end 532 of the tube 530 allows ingress of fluid from the annulus region 510 at or around the region where the end of the tube 530 terminates. This allows target gas at or near to the particular location where the tube 530 terminates to be sampled. A further tube 540 extends a predetermined distance straight along the flexible pipe. The tube 540 extends along a length b from an end of the flexible pipe to an open free end which provides an inlet 542. This open end likewise enables target gas in the annulus 510 at or around the specific location where the tube terminates to be gathered as desired. A third tube 550 likewise extends in a straight manner along a length of the flexible pipe. The tube 550 extends a distance c from an end of the flexible pipe to an open end 552 of the tube 550. It will be appreciated that as previously described openings allowing fluid communication between the annulus and monitoring system could alternatively be provided as through holes in a wall of the tube. As such each tube 530, 540, 550 could extend along a whole length of the flexible pipe with through holes being provided at predetermined desired locations. Multiple through holes around a particular region could of course be utilised to assist in target gas collection.

An end of the tube 530 is connected to an inspection system 380 of the type previously described via a fluid communication passageway 584. Aptly this is provided, at least in part, by a suitable passageway provided in the end fitting and a further steel tube leading from an external connector on the end fitting 520 to a housing of the inspection system. The tube 540 is connected to the inspection system via a fluid communication passageway 586. Aptly this is provided, at least in part, by a suitable passageway provided in the end fitting 520 and a steel tube leading from an external connector on the end fitting 520 to a housing for the inspection system. The tube 550 is connected to the inspection system 380 by a fluid communication passageway 592. Aptly this is provided, at least in part, by a suitable passageway provided in the end fitting and a steel tube leading from an external connector of an end fitting 520 to a housing for the inspection system. It will be appreciated that the three passageways 584, 586, 592 could be connected to any three of the four connectors illustrated in Figure 4 or else a modified inspection system could be utilised having only three input connections. Alternatively the multiple inputs could be input to a multiplexor type valve.

Certain embodiments of the present invention combine the advantages of being able to sample multiple physically separated locations along the length of the annulus region of a single flexible pipe with the use of quantum cascade laser gas analysis technology. The combination provides a highly versatile and accurate system which is able to operate in real time to deliver data for regions of an annulus along a whole length of a flexible pipe. The real time banding of an elongate annulus region enables a very high degree of prediction to be used during analysis. For example the development (in terms of time based rate of change) of increased or decreased levels of one or more target gas species along a length of a pipe enables a scale of a problem to be predicted. The QCL measurement technique utilises the absorption of light in the mid infrared where most gases have their fundamental absorptions. These are 100 to 1000 greater than in the near infrared which is where some conventional gas measurements are carried out. In addition the QCL technology uses a high resolution optical source and detector which enables multiple gases to be measured simultaneously without cross interference from each other or contaminants in the process gases.

Multiple gases can be measured simultaneously and in real time without any significant gas conditioning (such as drying) being required. By contrast some conventional techniques have significant cross interference from water.

Multiple gases can be measured simultaneously using a single technology in a single instrument as part of a monitoring system and monitoring can effectively occur at selected locations along the length of a flexible pipe. Use of solid state technology with no moving parts and with little or no calibration requirements and low maintenance is particularly useful for flexible pipeline uses where access to a flexible pipe is often extremely difficult (and thus costly) or impossible.

Certain embodiments of the present invention have been described with reference to a single lumen tube. It will of course be appreciated that a winding might comprise any elongate element that provides an elongate passageway having a predetermined shaped cross section along its length. For example the winding and/or internal passageway may have a circular or square or ellipsoidal or hexagonal cross section. Likewise any elongate winding may itself include multiple internal passageways along its length. Each internal passageway may share a common length or have a different length. Aptly an elongate winding is a multi-lumen tube with an associated through hole through a wall of the tube at a desired location for each lumen. This allows a single winding in a flexible pipe to provide multi-location fluid communication between a annulus region of a flexible pipe and a sampling chamber/zone.

Throughout the description and claims of this specification, the words "comprise" and "contain" and variations of them mean "including but not limited to" and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the invention are to be understood to be applicable to any other aspect, embodiment or example described herein unless incompatible therewith.

## Claims

1. Apparatus for monitoring an annulus region (310₁, 310₂, 510) of at least one flexible pipe (205, 300₁, 300₂, 500), the annulus region (205, 300₁, 300₂, 500) comprising an annular volume defined between fluid retaining layers of the flexible pipe (205, 300₁, 300₂, 500);
the apparatus comprising:
a sampling chamber (450) comprising a sampling zone (440); and
a monitoring system (455) for determining a concentration value for at least one target gas species in the sampling zone (440); wherein
the sampling zone (440) is selectively connectable to a one of a plurality of fluid sampling passageways comprising tubes (330, 340, 360, 375, 530, 540, 550) in fluid communication with an annulus region of, and extending at least partially along the length of, a respective one, of at least one, flexible pipe, for providing fluid from said an annulus region in the sampling zone (440) via the connected sampling passageway.

2. The apparatus as claimed in claim 1, further comprising:
each sampling passageway (330, 340, 360, 375, 530, 540, 550) comprises at least one fluid inlet (345, 350, 370, 365, 532, 542, 552) disposed at a respective location along a length of said a respective one flexible pipe.

3. The apparatus as claimed in claim 2, further comprising:
the respective location of each fluid inlet (345, 350, 370, 365, 532, 542, 552) associated with each sampling passageway (330, 340, 360, 375, 530, 540, 550) is at a different location spaced apart along the length of the flexible pipe.

4. The apparatus as claimed in claim 2 or claim 3, further comprising:
each tube (330, 340, 530, 540, 550) extends a respective distance along the length of the flexible pipe; and each fluid inlet comprises an open end (345, 350, 532, 542, 552) of the tube (330, 340, 530, 540, 550);
or
each tube (360, 375) extends along a whole length of the flexible pipe; and
each fluid inlet comprises a through hole (365, 370) in a wall member of the tube (360, 375) at a predetermined location along the length of the flexible pipe.

5. The apparatus as claimed in claim 4, further comprising:
each tube (330, 340, 365, 370, 530, 540, 550) is an elongate element having a substantially round or square cross section wound as an armour layer (103, 105, 106) winding of the flexible pipe.

6. The apparatus as claimed in any preceding claim, further comprising:
a respective valve member (424, 426, 432, 436) associated with each sampling passageway, that is responsive to a valve control signal for selectively fluidically connecting or disconnecting the annulus region (205, 300₁, 300₂, 500) with or from the sampling zone (440) via the sampling passageway (330, 340, 360, 375, 530, 540, 550).

7. The apparatus as claimed in claim 6, wherein the sampling chamber (450) comprises:
a plurality of chamber inlet orifices each associated with a corresponding outlet of a respective one respective valve member (424, 426, 432, 436);
an evacuation exit orifice connectable to a vacuum pump (475) via an exit valve (480); and
a flush agent introduction orifice connectable to a source (485) of a flushing agent via an introduction valve (490).

8. The apparatus as claimed in any preceding claim, further comprising:
the monitoring system (455) comprises a laser absorption spectroscopy monitoring system.

9. A method of monitoring an annulus region (205, 300₁, 300₂, 500) of a flexible pipe (205, 300₁, 300₂, 500), the annulus region (205, 300₁, 300₂, 500) comprising an annular volume defined between fluid retaining layers of the flexible pipe (205, 300₁, 300₂, 500);
the method comprising the steps of:
selectively connecting a one of a plurality of fluid sampling passageways (330, 340, 360, 375, 530, 540, 550) in fluid communication with an annulus region of, and extending at least partially along the length of, a respective one, of at least one, flexible pipe, to a sampling zone (440) of a sampling chamber (450);
providing fluid from said an annulus region to the sampling zone (440) via the connected sampling passageway; and
via a monitoring system (455), determining a concentration value for at least one target gas species in the sampling zone (440).

10. The method as claimed in claim 9, further comprising the step of:
providing at least one target gas species from a respective location along said annulus region to each sampling passageway via at least one fluid inlet (345, 350, 370, 365, 532, 542, 552) of the sampling passageway disposed at said respective location.

11. The method as claimed in claim 9 or 10, further comprising the steps of:
one-by-one selectively connecting each of the plurality of fluid sampling passageways (330, 340, 360, 375, 530, 540, 550) to the sampling zone (440); and
determining a corresponding concentration value for at least one target gas species provided to the sampling zone when each sampling passageway (330, 340, 360, 375, 530, 540, 550) is connected;
and/or
determining a corresponding concentration value for a plurality of different locations along a length of an annulus of a flexible pipe.

12. The method as claimed in claim 11, further comprising the steps of:
selectively connecting each sampling passageway (330, 340, 360, 375, 530, 540, 550) in fluid communication with said an annulus region and said sampling zone (440) by selectively opening a respective valve member (424, 426, 432, 436) associated with the sampling passageway; and
providing target gas, comprising each said target gas species, from the annulus to the sampling zone (440) via the open valve member (424, 426, 432, 436).

13. The method as claimed in any one of claims 9 to 12, further comprising one or more of the following steps:
determining each concentration value via a quantum cascade laser (QCL) source and detector;
selecting a temperature of a target gas flowing from said an annulus region to the sampling zone (440) thereby determining a parameter associated with the target gas;
and
determining a standard sour service rating or occurrence of an event associated with said an annulus region.

14. A flexible pipe for transporting production fluids, comprising:
a segment of flexible pipe body (100);
at least one end fitting (320₁, 320₂, 520) at a respective end of the flexible pipe body (100); and
a plurality of tubes (330, 340, 365, 370, 530, 540, 550) each having a respective length and wound as a respective winding of a respective tensile armour layer of the flexible pipe body; wherein
the tubes (330, 340, 365, 370, 530, 540, 550) are all in fluid communication with an annulus region of the flexible pipe body (100), the annulus region comprising an annular volume defined between fluid retaining layers of the flexible pipe body (100);
and wherein the tubes (330, 340, 365, 370, 530, 540, 550) are each selectively connectable to a sampling zone (440) of a monitoring system (455) that determines a concentration value for at least one target gas species in the sampling zone (440);
wherein the plurality of tubes (330, 340, 365, 370, 530, 540, 550) comprises at least a first tube (330) wound in a first tensile armour layer (105), and at least a further tube (340) wound in a second tensile armour layer (106), the first tensile armour layer being radially innermost of the second tensile armour layer.

15. The flexible pipe as claimed in claim 14, further comprising:
each tube (330, 340, 365, 370, 530, 540, 550) comprises a fluid inlet (345, 350, 370, 365, 532, 542, 552) disposed at a respective location along a length of said a respective one flexible pipe;
and/or
wherein each tube has a substantially round or elliptical cross section;
and/or
wherein each tube (330, 340, 365, 370, 530, 540, 550) comprises an armouring element in the flexible pipe body and provides at least a portion of a sampling passageway;
and/or
wherein the at least one first tube and the at least one further tube are counter wound in their respective layers.

## Patentansprüche

1. Vorrichtung zum Überwachen einer Ringregion (310₁, 310₂, 510) von zumindest einem flexiblen Rohr (205, 300₁, 300₂, 500), wobei die Ringregion (205, 300₁, 300₂, 500) ein ringförmiges Volumen umfasst, das zwischen Fluidhalteschichten des flexiblen Rohrs (205, 300₁, 300₂, 500) definiert ist;
wobei die Vorrichtung Folgendes umfasst:
eine Probenahmekammer (450), die einen Probenahmebereich (440) umfasst; und
ein Überwachungssystem (455) zum Bestimmen eines Konzentrationswertes für zumindest eine Zielgasspezies in dem Probenahmebereich (440); wobei
der Probenahmebereich (440) selektiv mit einem aus einer Vielzahl von Fluidprobenahmedurchlässen verbindbar ist, die Röhren (330, 340, 360, 375, 530, 540, 550) in Fluidkommunikation mit einer Ringregion eines jeweiligen von zumindest einem flexiblen Rohr und sich zumindest teilweise entlang der Länge davon erstreckend umfassen, um Fluid von einer Ringregion in dem Probenahmebereich (440) über den verbundenen Probenahmedurchlass bereitzustellen.

2. Vorrichtung nach Anspruch 1, ferner umfassend:
jeder Probenahmedurchlass (330, 340, 360, 375, 530, 540, 550) umfasst zumindest einen Fluideinlass (345, 350, 370, 365, 532, 542, 552), der an einer jeweiligen Stelle entlang einer Länge des jeweiligen einen flexiblen Rohrs angeordnet ist.

3. Vorrichtung nach Anspruch 2, ferner umfassend:
die jeweilige Stelle jedes Fluideinlasses (345, 350, 370, 365, 532, 542, 552) in Verbindung mit jedem Probenahmedurchlass (330, 340, 360, 375, 530, 540, 550) befindet sich an einer anderen Stelle, die entlang der Länge des flexiblen Rohrs beabstandet ist.

4. Vorrichtung nach Anspruch 2 oder Anspruch 3, ferner umfassend:
jede Röhre (330, 340, 530, 540, 550) erstreckt sich eine jeweilige Strecke entlang der Länge des flexiblen Rohrs; und jeder Fluideinlass umfasst ein offenes Ende (345, 350, 532, 542, 552) der Röhre (330, 340, 530, 540, 550); oder
jede Röhre (360, 375) erstreckt sich entlang einer gesamten Länge des flexiblen Rohrs; und jeder Fluideinlass umfasst ein Durchgangsloch (365, 370) in einem Wandelement der Röhre (360, 375) an einer zuvor festgelegten Stelle entlang der Länge des flexiblen Rohrs.

5. Vorrichtung nach Anspruch 4, ferner umfassend:
jede Röhre (330, 340, 365, 370, 530, 540, 550) ist ein längliches Element, das einen im Wesentlichen runden oder quadratischen Querschnitt aufweist, der als Windung einer Bewehrungsschicht (103, 105, 106) des flexiblen Rohrs gewunden ist.

6. Verfahren nach einem vorhergehenden Anspruch, ferner umfassend:
ein jeweiliges Ventilelement (424, 426, 432, 436) in Verbindung mit jedem Probenahmedurchlass, das auf ein Ventilsteuersignal reagiert, um die Ringregion (205, 300₁, 300₂, 500) über den Probenahmedurchlass (330, 340, 360, 375, 530, 540, 550) selektiv fluidisch mit dem Probenahmebereich (440) zu verbinden oder davon zu trennen.

7. Vorrichtung nach Anspruch 6, wobei die Probenahmekammer (450) Folgendes umfasst:
eine Vielzahl von Kammereinlassöffhungen, die jeweils mit einem entsprechenden Auslass eines jeweiligen Ventilelements (424, 426, 432, 436) verbunden sind;
eine Notaustrittsöffnung, die über ein Austrittsventil (480) mit einer Vakuumpumpe (475) verbindbar ist; und
eine Spülmitteleinführungsöffnung, die über ein Einführungsventil (490) mit einer Quelle (485) eines Spülmittels verbindbar ist.

8. Verfahren nach einem vorhergehenden Anspruch, ferner umfassend:
das Überwachungssystem (455) umfasst ein Laserabsorptionsspektroskopieüberwachungssystem.

9. Verfahren zum Überwachen einer Ringregion (205, 300₁, 300₂, 500) eines flexiblen Rohrs (205, 300₁, 300₂, 500), wobei die Ringregion (205, 300₁, 300₂, 500) ein ringförmiges Volumen umfasst, das zwischen Fluidhalteschichten des flexiblen Rohrs (205, 300₁, 300₂, 500) definiert ist;
wobei das Verfahren die folgenden Schritte umfasst:
selektives Verbinden von einem aus einer Vielzahl von Fluidprobenahmedurchlässen (330, 340, 360, 375, 530, 540, 550) in Fluidkommunikation mit einer Ringregion eines jeweiligen von zumindest einem flexiblen Rohr und sich zumindest teilweise entlang der Länge davon erstreckend mit einem Probenahmebereich (440) einer Probenahmekammer (450);
Bereitstellen von Fluid von der Ringregion an den Probenahmebereich (440) über den verbundenen Probenahmedurchlass; und
über ein Überwachungssystem (455) Bestimmen eines Konzentrationswertes für zumindest eine Zielgasspezies in dem Probenahmebereich (440).

10. Verfahren nach Anspruch 9, ferner den folgenden Schritt umfassend:
Bereitstellen von zumindest einer Zielgasspezies von einer jeweiligen Stelle entlang der Ringregion an jeden Probenahmedurchlass über zumindest einen Fluideinlass (345, 350, 370, 365, 532, 542, 552) des Probenahmedurchlasses, der an der jeweiligen Stelle angeordnet ist.

11. Verfahren nach Anspruch 9 oder 10, ferner die folgenden Schritte umfassend:
nacheinander selektives Verbindung von jedem aus der Vielzahl von Fluidprobenahmedurchlässen (330, 340, 360, 375, 530, 540, 550) mit dem Probenahmebereich (440); und
Bestimmen eines entsprechenden Konzentrationswertes für zumindest eine Zielgasspezies, die dem Probenahmebereich bereitgestellt wird, wenn jeder Probenahmedurchlass (330, 340, 360, 375, 530, 540, 550) verbunden ist;
und/oder
Bestimmen eines entsprechenden Konzentrationswertes für eine Vielzahl von unterschiedlichen Stellen entlang einer Länge eines Rings eines flexiblen Rohrs.

12. Verfahren nach Anspruch 11, ferner die folgenden Schritte umfassend:
selektives Verbinden jedes Probenahmedurchlasses (330, 340, 360, 375, 530, 540, 550) in Fluidkommunikation mit der Ringregion und dem Probenahmebereich (440) durch selektives Öffnen eines jeweiligen Ventilelements (424, 426, 432, 436) in Verbindung mit dem Probenahmedurchlass; und
Bereitstellen von Zielgas, das jede Zielgasspezies umfasst, von dem Ring an den Probenahmebereich (440) über das offene Ventilelement (424, 426, 432, 436).

13. Verfahren nach einem der Ansprüche 9 bis 12, ferner umfassend einen oder mehrere der folgenden Schritte:
Bestimmen jedes Konzentrationswertes über eine(n) Quantenkaskadenlaser-(QCL-)Quelle und -detektor;
Auswählen einer Temperatur eines Zielgases, das von der Ringregion zu dem Probenahmebereich (440) strömt, wodurch ein Parameter in Verbindung mit dem Zielgas bestimmt wird;
und
Bestimmen eines standardmäßigen sauren Service-Ratings oder -Vorkommens eines Ereignisses in Verbindung mit der Ringregion.

14. Flexibles Rohr zum Transportieren von Produktionsfluiden, umfassend:
ein Segment an flexiblem Rohrkörper (100);
zumindest ein Endstück (320₁, 320₂, 520) an einem jeweiligen Ende des flexiblen Rohrkörpers (100); und
eine Vielzahl von Röhren (330, 340, 365, 370, 530, 540, 550), die jeweils eine jeweilige Länge aufweisen und als eine jeweilige Windung einer jeweiligen Zugbewehrungsschicht des flexiblen Rohrkörpers gewunden sind; wobei
die Röhren (330, 340, 365, 370, 530, 540, 550) alle in Fluidkommunikation mit einer Ringregion des flexiblen Rohrkörpers (100) stehen, wobei die Ringregion ein ringförmiges Volumen umfasst, das zwischen Fluidhalteschichten des flexiblen Rohrkörpers (100) definiert ist;
und wobei die Röhre (330, 340, 365, 370, 530, 540, 550) jeweils selektiv mit einem Probenahmebereich (440) eines Überwachungssystems (455) verbindbar sind, das einen Konzentrationswert für zumindest eine Zielgasspezies in dem Probenahmebereich (440) bestimmt;
wobei die Vielzahl von Röhren (330, 340, 365, 370, 530, 540, 550) zumindest eine erste Röhre (330), die in einer ersten Zugbewehrungsschicht (105) gewunden ist, und zumindest eine weitere Röhre (340) umfasst, die in einer zweiten Zugbewehrungsschicht (106) gewunden ist, wobei die erste Zugbewehrungsschicht radial am innersten der zweiten Zugbewehrungsschicht ist.

15. Flexibles Rohr nach Anspruch 14, ferner umfassend:
jede Röhre (330, 340, 365, 370, 530, 540, 550) umfasst einen Fluideinlass (345, 350, 370, 365, 532, 542, 552), der an einer jeweiligen Stelle entlang einer Länge des jeweiligen einen flexiblen Rohrs angeordnet ist;
und/oder
wobei jede Röhre einen im Wesentlichen runden oder elliptischen Querschnitt aufweist;
und/oder
wobei jede Röhre (330, 340, 365, 370, 530, 540, 550) ein Bewehrungselement in dem flexiblen Rohrkörper umfasst und zumindest einen Abschnitt eines Probenahmedurchlasses bereitstellt;
und/oder
wobei die zumindest eine erste Röhre und die zumindest eine weitere Röhre in ihren jeweiligen Schichten gegengewunden sind.

## Revendications

1. Appareil de surveillance d'une région annulaire (310₁, 310₂, 510) d'au moins un conduit flexible (205, 300₁, 300₂, 500), la région annulaire (205, 300₁, 300₂, 500) comprenant un volume annulaire défini entre des couches de rétention de fluide du conduit flexible (205, 300₁, 300₂, 500) ;
l'appareil comprenant :
une chambre d'échantillonnage (450) comprenant une zone d'échantillonnage (440) ; et
un système de surveillance (455) destiné à déterminer une valeur de concentration pour au moins une espèce gazeuse cible dans la zone d'échantillonnage (440) ; dans lequel
la zone d'échantillonnage (440) est connectable sélectivement à l'un d'une pluralité de passages d'échantillonnage de fluide comprenant des tubes (330, 340, 360, 375, 530, 540, 550) en communication fluide avec une région annulaire de, et s'étendant au moins partiellement le long de la longueur de, l'un respectif, d'au moins un conduit flexible, pour délivrer un fluide depuis ladite une région annulaire dans la zone d'échantillonnage (440) via le passage d'échantillonnage connecté.

2. Appareil selon la revendication 1, comprenant en outre :
chaque passage d'échantillonnage (330, 340, 360, 375, 530, 540, 550) comprend au moins une admission de fluide (345, 350, 370, 365, 532, 542, 552) disposée à un emplacement respectif le long d'une longueur dudit l'un conduit flexible respectif.

3. Appareil selon la revendication 2, comprenant en outre :
l'emplacement respectif de chaque admission de fluide (345, 350, 370, 365, 532, 542, 552) associée à chaque passage d'échantillonnage (330, 340, 360, 375, 530, 540, 550) se situe à un emplacement différent espacé le long de la longueur du conduit flexible.

4. Appareil selon la revendication 2 ou 3, comprenant en outre :
chaque tube (330, 340, 530, 540, 550) s'étend sur une distance respective le long de la longueur du conduit flexible ; et chaque admission de fluide comprend une extrémité ouverte (345, 350, 532, 542, 552) du tube (330, 340, 530, 540, 550) ; ou
chaque tube (360, 375) s'étend le long d'une longueur totale du conduit flexible ; et chaque admission de fluide comprend un trou débouchant (365, 370) dans un élément de paroi du tube (360, 375) à un emplacement prédéterminé le long de la longueur du conduit flexible.

5. Appareil selon la revendication 4, comprenant en outre :
chaque tube (330, 340, 365, 370, 530, 540, 550) est un élément allongé ayant une section transversale sensiblement arrondie ou carrée enroulé en tant qu'enroulement de couche d'armure (103, 105, 106) du conduit flexible.

6. Appareil selon l'une quelconque revendication précédente, comprenant en outre :
un élément de vanne respectif (424, 426, 432, 436) associé à chaque passage d'échantillonnage, qui est réactif à un signal de commande de vanne destiné à connecter ou déconnecter sélectivement par voie fluide la région annulaire (205, 300₁, 300₂, 500) avec ou de la zone d'échantillonnage (440) via le passage d'échantillonnage (330, 340, 360, 375, 530, 540, 550).

7. Appareil selon la revendication 6, dans lequel la chambre d'échantillonnage (450) comprend :
une pluralité d'orifices d'admission de chambre chacun associé à une évacuation correspondante d'un respectif de l'un élément de vanne respectif (424, 426, 432, 436) ;
un orifice de sortie d'évacuation connectable à une pompe à vide (475) via une vanne de sortie (480) ; et
un orifice d'introduction d'agent de rinçage connectable à une source (485) d'un agent de rinçage via une vanne d'introduction (490).

8. Appareil selon l'une quelconque revendication précédente, comprenant en outre :
le système de surveillance (455) comprend un système de surveillance de spectroscopie par absorption laser.

9. Procédé de surveillance d'une région annulaire (205₁, 300₁, 300₂, 500) d'un conduit flexible (205, 300₁, 300₂, 500), la région annulaire (205, 300₁, 300₂, 500) comprenant un volume annulaire défini entre des couches de rétention de fluide du conduit flexible (205, 300₁, 300₂, 500) ;
le procédé comprenant les étapes de :
connexion sélective de l'un d'une pluralité de passages d'échantillonnage de fluide (330, 340, 360, 375, 530, 540, 550) en communication fluide avec une région annulaire de, et s'étendant au moins partiellement le long de la longueur de, l'un respectif, d'au moins un conduit flexible, à zone d'échantillonnage (440) d'une chambre d'échantillonnage (450) ;
délivrance d'un fluide depuis une région annulaire à la zone d'échantillonnage (440) via le passage d'échantillonnage connecté ; et
via un système de surveillance (455), détermination d'une valeur de concentration pour au moins une espèce gazeuse cible dans la zone d'échantillonnage (440).

10. Procédé selon la revendication 9, comprenant en outre l'étape de :
délivrance d'au moins une espèce gazeuse cible depuis un emplacement respectif le long de ladite région annulaire à chaque passage d'échantillonnage via au moins une admission de fluide (345, 350, 370, 365, 532, 542, 552) du passage d'échantillonnage disposé au niveau dudit emplacement respectif.

11. Procédé selon la revendication 9 ou 10, comprenant en outre les étapes de :
connexion sélective un par un de chacun de la pluralité de passages d'échantillonnage de fluide (330, 340, 360, 375, 530, 540, 550) à la zone d'échantillonnage (440) ; et
détermination d'une valeur de concentration correspondante pour au moins une espèce gazeuse cible délivrée à la zone d'échantillonnage quand chaque passage d'échantillonnage (330, 340, 360, 375, 530, 540, 550) est connecté ;
et/ou
détermination d'une valeur de concentration correspondante pour une pluralité d'emplacements différents le long d'une longueur d'un anneau d'un conduit flexible.

12. Procédé selon la revendication 11, comprenant en outre les étapes de :
connexion sélective de chaque passage d'échantillonnage (330, 340, 360, 375, 530, 540, 550) en communication fluide avec ladite une région annulaire et ladite zone d'échantillonnage (440) par ouverture sélective d'un élément de vanne respectif (424, 426, 432, 436) associé au passage d'échantillonnage ; et
délivrance d'un gaz cible, comprenant chaque dite espèce gazeuse cible, depuis l'anneau à la zone d'échantillonnage (440) via l'élément de vanne ouvert (424, 426, 432, 436).

13. Procédé selon l'une quelconque des revendications 9 à 12, comprenant en outre l'une ou plusieurs des étapes suivantes :
détermination de chaque valeur de concentration via une source de laser à cascade quantique (QCL) et un détecteur ;
sélection d'une température d'un gaz cible s'écoulant depuis ladite une région annulaire à la zone d'échantillonnage (440) déterminant de la sorte un paramètre associé au gaz cible ;
et
détermination d'une classification de corrosion standard ou d'une occurrence d'un événement associé à ladite une région annulaire.

14. Conduit flexible destiné à transporter des fluides de production, comprenant :
un segment d'un corps de conduit flexible (100) ;
au moins une garniture d'extrémité (320₁, 320₂, 520) à une extrémité respective du corps de conduit flexible (100) ; et
une pluralité de tubes (330, 340, 365, 370, 530, 540, 550) ayant chacun une longueur respective et enroulés en tant qu'un enroulement respectif d'une couche d'armure résistante à la traction respective du corps de conduit flexible ; dans lequel
les tubes (330, 340, 365, 370, 530, 540, 550) sont tous en communication fluide avec une région annulaire du corps de conduit flexible (100), la région annulaire comprenant un volume annulaire défini entre des couches de rétention de fluide du corps de conduit flexible (100) ;
et dans lequel les tubes (330, 340, 365, 370, 530, 540, 550) sont chacun connectables sélectivement à une zone d'échantillonnage (440) d'un système de surveillance (455) qui détermine une valeur de concentration pour au moins une espèce gazeuse cible dans la zone d'échantillonnage (440) ;
dans lequel la pluralité de tubes (330, 340, 365, 370, 530, 540, 550) comprend au moins un premier tube (330) enroulé dans une première couche d'armure résistante à la traction (105), et au moins un tube supplémentaire (340) enroulé dans une deuxième couche d'armure résistante à la traction (106), la première couche d'armure résistante à la traction étant radialement la plus à l'intérieur de la deuxième couche d'armure résistante à la traction.

15. Conduit flexible selon la revendication 14, comprenant en outre :
chaque tube (330, 340, 365, 370, 530, 540, 550) comprend une admission de fluide (345, 350, 370, 365, 532, 542, 552) disposée à un emplacement respectif le long d'une longueur dudit un respectif de l'un conduit flexible ;
et/ou
dans lequel chaque tube a une section transversale sensiblement arrondie ou elliptique ;
et/ou
dans lequel chaque tube (330, 340, 365, 370, 530, 540, 550) comprend un élément d'armure dans le corps de conduit flexible ou délivre au moins une partie d'un passage d'échantillonnage ;
et/ou
dans lequel l'au moins un premier tube et l'au moins un tube supplémentaire sont enroulés dans le sens inverse dans leurs couches respectives.
